# EUROPEAN PATENT APPLICATION

(11) **EP 2 600 433 A1**
(43) Date of publication of application: **05.06.2013**
(21) Application number: 12152672.7
(22) Date of filing: 26.01.2012
(51) Int. Cl.: H01M 2/04, H01M 2/26, H01M 2/30, H01M 2/02, H01M 10/052

(54) **Lithium ion battery**

(30) Priority: 02.12.2011 CN 201110395170; 02.12.2011 CN 201110395181; 02.12.2011 CN 201110395183; 02.12.2011 CN 201110395180
(71) Applicant: Suzhou Golden Crown New Energy Co., Ltd., Suzhou City, Jiangsu (CN); Golden Crown New Energy (HK) Limited, Kowloon, Hong Kong (CN)
(72) Inventor: Huang, Jen-Chin, Suzhou City Jiangsu (CN); Song, Huabin, Suzhou City Jiangsu (CN); Zeng, Yu, Suzhou City Jiangsu (CN)
(74) Representative: O'Callaghan, Robert James

(57) **Abstract**

A lithium ion battery (100) includes a cell assembly (20), a casing (200) containing the cell assembly with electrolyte filling therein, a cap assembly (300) a retaining member (50) and an insulator (70). The cell assembly comprises a number of stacked electrode plates, each electrode plate having an electrode ear. The cap assembly includes a cap plate (30) covering a top side of the casing, a pair of electrode terminals (10) assembled to one side face of the cap plate, and a pair of cap ears (41, 42) connecting to and electrically separated from the other side face of the cap plate. The retaining member is connecting the cap plate, the pair of electrode terminals and the cap ears, and the insulator electrically separates the electrode terminals from the cap plate and the cap plate from the cap ears.

## Description

The present invention relates generally to a battery, and more particularly to a rechargeable lithium ion battery.

Generally, rechargeable batteries can be charged or discharged numerous times in comparison with conventional primary batteries which cannot be charged. Nowadays, lithium (Li) batteries, lithium ion batteries, and Ni-MH batteries are widely used as rechargeable battery. The rechargeable battery is usually classified into a liquid electrolyte battery and a polymer electrolyte battery based on the electrolyte used in the battery. Typically, the lithium ion battery is a liquid electrolyte battery. In the art, the lithium ion battery is manufactured in various shapes, such as cylindrical, rectangular, and pouch shapes.

Usually, the shape of the lithium ion battery has a great effect upon the design and manufacturing of the cell structure. For example, the cylindrical battery generally has a winded cell core structure, while, for a rectangular shape battery, a plurality of stacked electrode plates constitute a cell core structure. Currently, there are several methods to manufacture the stacked electrode plates or cell core structure for rectangular battery. For example, Chinese Patent No. 101485033 discloses a Zigzag method. Chinese Patent No. 101174681 discloses an insulator-bagging method. Chinese Patent No. 101405911 discloses an insulator-sectioning method.

For the Zigzag method, the positive pole and the negative pole are formed by plating positive/negative material on the plate and employing electrode ears connecting thereto, respectively. A separator will be positioned between neighbored two plates for insulation purposes. If the positive electrode ear and the negative electrode ear are facing to a same direction, corresponding terminals, which are attached to a cap of the battery, will be located at the same side. Consequently, the designs of insulation and connection for the cap and the cell core structure of the battery are relatively important.

Therefore, a heretofore unaddressed need exists in the art to address the aforementioned deficiencies and inadequacies.

In one aspect of the present invention, a lithium ion battery comprises a cell assembly, a casing containing the cell assembly with electrolyte filling therein, a cap assembly a retaining member and an insulator. The cell assembly comprises a plurality of stacked electrode plates, each electrode plate having an electrode ear. The cap assembly comprises a cap plate covering a top side of the casing, a pair of electrode terminals assembled to one side face of the cap plate, and a pair of cap ears connecting to and electrically separated from the other side face of the cap plate. The retaining member is connecting the cap plate, the pair of electrode terminals and the cap ears and the insulator electrically separates the electrode terminals with the cap plate and the cap ears.

In another aspect of the present invention, a lithium ion battery includes a cell assembly, a casing, a cap assembly, a retaining member, an insulator and electrolyte. The cell assembly includes a plurality of stacked electrode plates, and each electrode plate has an electrode ear. The casing contains the cell assembly. The cap assembly includes a cap plate covering a top side of the casing, a pair of electrode terminals assembled to one side face of the cap plate, and a pair of cap ears connecting to and electrically separated from the other side face of the cap plate. The retaining member connects the cap plate, the pair of electrode terminals and the cap ears. The insulator electrically separates the electrode terminals with the cap plate and the cap ears. The electrolyte is filled within the casing.

In one embodiment, the electrode ears of the electrode plates are soldered together to form a first electrode ear and a second electrode ear, respectively, and the first electrode ear and the second electrode ear are electrically separated from each other.

In a further embodiment, the first electrode ear electrically and mechanically connects with one cap ear and the second electrode ear electrically and mechanically connects with another cap ear. Further, the first electrode ear and the one cap ear may have an M-shape cross section, and the second electrode ear and the another cap ear may have an M-shape cross section.

In yet another embodiment, the first electrode ear includes a first connecting section connecting to the electrode plates having a first polarity and a first engaging section connecting to the cap ear, and the second electrode ear includes a first connecting section connecting to the electrode plates having a second polarity and a first engaging section connecting to another cap ear. Further, the cap ear may have a second connecting section connecting to the cap plate and a second engaging section engaging with the first engaging section of the first and second electrode ears. In addition, the insulator may have a gasket positioned between the cap plate and the cell assembly. A distance between the cap plate and the stacked electrode plates of the cell assembly is preferably no larger than 10mm.

In another embodiment, each of the pair of electrode terminals has a mounting portion mounting to the cap plate and a contact portion projecting perpendicularly from the mounting portion. Further, the contact portion may form thereon screw threads. In addition, the pair of electrode terminals may connect with corresponding first and second electrode ears, respectively. The mounting portion of the electrode terminal may have an ellipse shape, and the electrode terminal may form a coating layer where the coating layer can be nickel or bronze.

In one embodiment, the electrode terminal has T-shaped cross section, and the electrode terminal is formed by cold stamping.

In one embodiment, the insulator has a first insulator member assembled to the cap plate and a second insulator member assembled to the cap ears. Further, the first insulator member may have a first insulating portion positioned to one side of the cap plate for electrically insulating the electrode terminal with the cap plate, and a second insulating portion positioned to opposite side of the cap plate for electrically insulating the cap plate with the cap ear. In one embodiment, the cap plate defines a cap hole and wherein the first insulator member adhered to inside surface of the cap hole. In another embodiment, the first insulator member includes an I-shaped cross section and wherein the second insulator member has a flat shape.

In one embodiment, one of the pair of cap ears is anode ear and the other one of the pair of cap ears is cathode ear.

In yet another aspect of the present invention, a lithium ion battery includes a cell assembly, a casing, and a cap assembly. The cell assembly includes a plurality of stacked electrode plates, a first electrode ear having a first polarity and a second electrode ear having a second polarity. The casing contains the cell assembly and defining a top opening. The cap assembly includes a cap plate covering the top opening of the casing, first and second electrode terminals assembled to one side face of the cap plate, and a first and a second cap ears connecting to and electrically separated from the other side face of the cap plate. The first electrode ear and the first cap ear are soldered with each other and the second electrode ear and the second cap ear are soldered with each other. The first electrode terminal electrically and mechanically connects with the first cap ear and the second electrode terminal electrically and mechanically connects with the second cap ear.

In one embodiment, the first electrode ear includes a first connecting section connecting to the electrode plates having the first polarity and a first engaging section connecting to the first cap ear, and the second electrode ear includes a first connecting section connecting to the electrode plates having the second polarity and a first engaging section connecting to the second cap ear.

In a further embodiment, the cap ear has a second connecting section connecting to the cap plate and a second engaging section engaging with the first engaging section of the electrode ear. Further, the first connecting section of the electrode ear may be vertical to the first engaging section when soldering to the cap ear, and the second connecting section of the cap ear may be vertical to the second engaging section when soldering to the electrode ear.

In one embodiment, the soldered electrode ear and corresponding cap ear has an M-shaped cross section.

These and other aspects of the present invention will become apparent from the following description of the preferred embodiment taken in conjunction with the following drawings, although variations and modifications therein may be effected without departing from the spirit and scope of the novel concepts of the disclosure.

The accompanying drawings illustrate one or more embodiments of the invention and together with the written description, serve to explain the principles of the invention. Wherever possible, the same reference numbers are used throughout the drawings to refer to the same or like elements of an embodiment, and wherein:
FIG. 1 is a perspective view of a lithium ion battery according to one embodiment of the present invention;
FIG. 2 is a partial, perspective view of the lithium ion battery shown in FIG. 1;
FIG. 3 is a partial exploded, perspective view of the lithium ion battery without a casing thereof;
FIG. 4 is another partial exploded, perspective view of the lithium ion battery;
FIG. 5 is a partial, perspective view of a cell assembly of the lithium ion battery according to one embodiment of the present invention;
FIG. 6 is a side plan view of the lithium ion battery as shown in FIG. 3;
FIG. 7 is a front plan view of the lithium ion battery as shown in FIG. 3; and
FIG. 8 is a sketch view of electrode ear and cap ear before soldering according to one embodiment of the present invention.

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

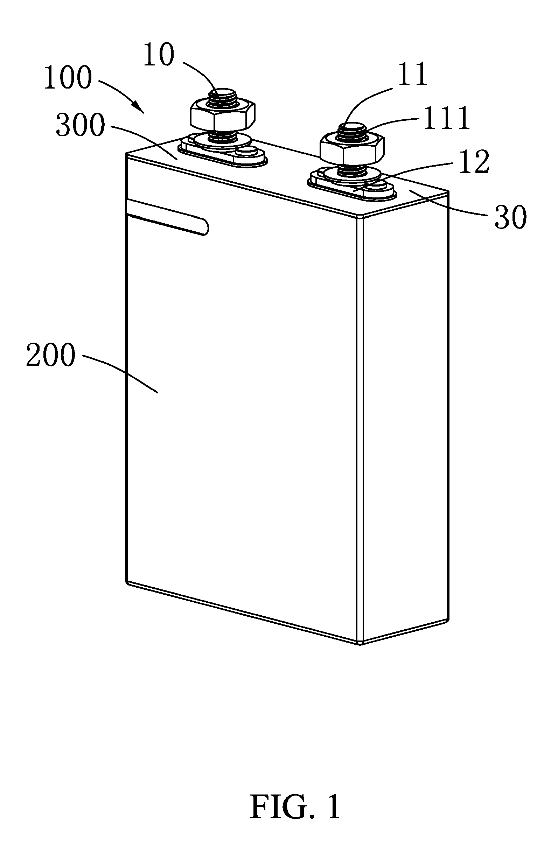

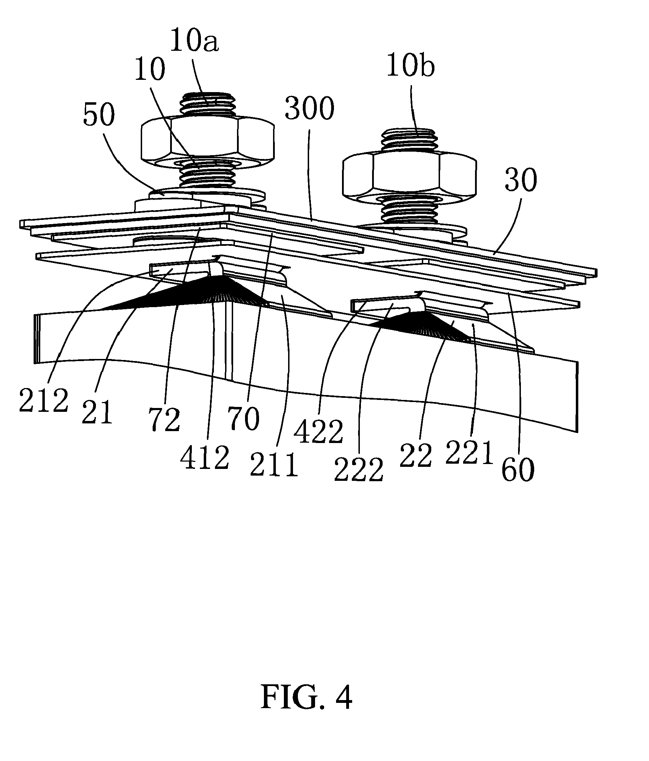

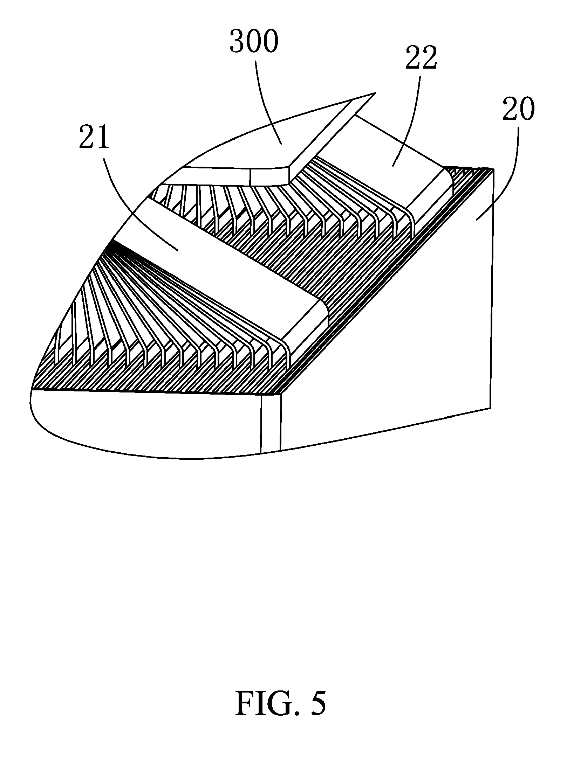

The description will be made as to the embodiments of the present invention in conjunction with the accompanying drawings in FIGS. 1-8. In accordance with the purposes of this invention, as embodied and broadly described herein, this invention, in one aspect, relates to a lithium ion battery.

Referring to FIGS. 1-5, a lithium ion battery 100 is shown according to one embodiment of the present invention, which is usable for a power source of an external device. The lithium ion battery 100 comprises a cell assembly 20, a casing 200 containing the cell assembly 20, and a cap assembly 300 assembled to the casing 200. The electrolyte is filled within the casing 200. The cap assembly 300 includes a cap plate 30 covering a top side or a top opening defined in the casing 200, a pair of electrode terminals 10 attached to one side face of the cap plate 30 and a pair of cap ears 41, 42 attached to opposite side face of the cap plate 30. The lithium ion battery 100 also includes a retaining member 50, such as a rivet, and an insulator member 70.

The cap plate 30 of the cap assembly 300 can have the same material with that of the casing 200, such as aluminum. The shape and the size of the cap plate 30 are designed according to those of the top opening of the casing 200. In this preferred embodiment, the cap plate has a rectangular shape. There are four holes (not shown) defined through the cap plate 30 for insertion of the retaining member 50 and the insulator member 70. The cap plate 30 is employed to encapsulate the battery 100 so that the insulator member 70 is adhered and covered inside surfaces of the holes. In this embodiment, the insulator member 70 has an I-shape cross section. Details of the insulator member 70 will be given hereinafter.

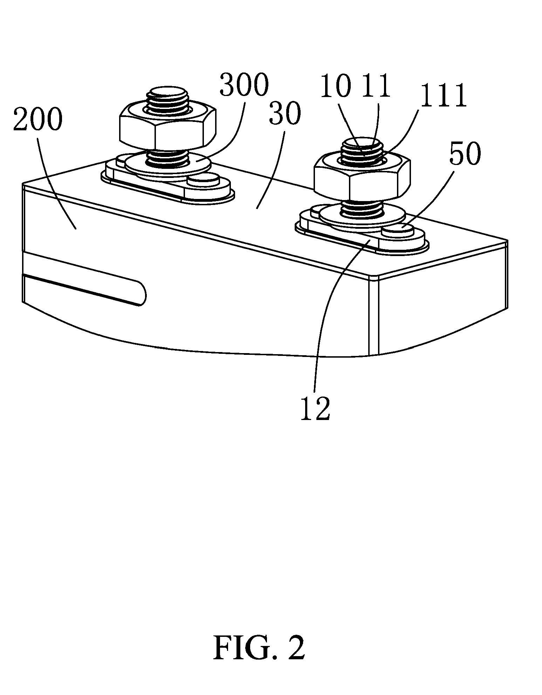

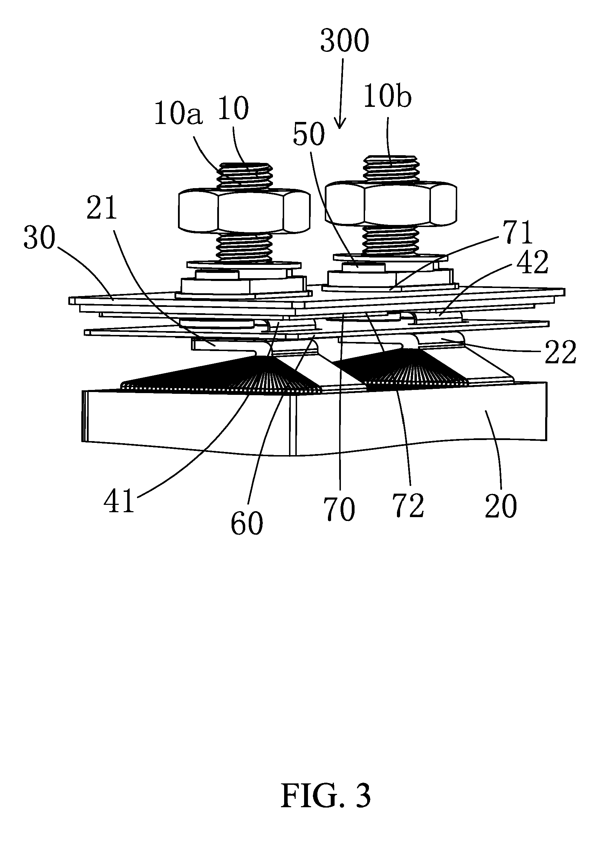

Together referring to FIGS. 2 and 3, the electrode terminal 10 forms a mounting portion 12 and a contact portion 11 extending perpendicularly from the mounting portion 12. The mounting portion 12 is secured to the cap plate 30 and the contact portion 11 is adapted for connecting with an external device (not shown). In this preferred embodiment, the contact portion 11 is provided with screw threads to thereby be screwed with the external device and the mounting portion 12 has an ellipse cross sectional shape. As can be understood, the shape of the mounting portion 12 is various according to the width of the battery 100. The cross section of the electrode terminal 10 is T-shaped. The electrode terminal 10 includes a positive terminal 10a and a negative terminal 10b, the main material of which is usually copper. Generally, a coating layer will be provided to the electrode terminal 10. The main material of the coating layer can be nickel or bronze. The use of the electrode terminal 10 is to conduct the electricity from inside of the battery to the outside. The electrode terminal 10 can be locked onto the cap assembly 300.

The electrode terminal 10 can be formed by cold stamping, including following steps: cutting a copper bar into several pieces of bars, each piece bar having a length of 15mm-20mm; beating one end of the bar into flat and round shape; cutting such end of the bar into ellipse shape to thereby form the mounting portion 12; making the contact portion 11 with screw threads formed thereon; ultrasonic cleaning the terminal 10; and finally, coating different layer on the cleaned terminal 10 according to the polarity thereof. The torsion of the electrode terminal 10 formed by cold stamping is relative large, which can be 10 Newton Metre.

The cell assembly 20 comprises a plurality of stacked electrode plates (not labeled), each of which has an electrode ear connecting thereto. The plurality of electrode ears are soldered by ultrasonic soldering so as to form a first electrode ear 21, which is a positive electrode ear, and a second electrode ear 22, which is a negative electrode ear. The first electrode ear 21 connects with the plurality of stacked electrode plates having positive polarity. The second electrode ear 22 connects with the plurality of electrode plates having negative polarity. The first and the second electrode ear 21 and 22 electrically and mechanically connect to the pair of cap ears 41 and 42, respectively.

The pair of cap ears 41 and 42 of the cap assembly 300 includes a first cap ear 41, which has positive polarity, and a second cap ear 42, which has negative polarity. The pair of cap ears 41 and 42 has different material. In this preferred embodiment, the material of the first cap ear 41 is aluminum and the material of the second cap ear 42 is copper plated nickel. As can be understood, the first and the second electrode ears 21 and 22 should have the same material with corresponding connected cap ear. The cap ears 41 and 42 are flat, the width of which is defined by the required current transmitted therethrough. For example, the width of the cap ear should be about 20mm-25mm when a 25Ah current is passed. The width of the cap ear should be about 15mm-20mm when a 16Ah current is passed. The width of the cap ear should be about 10mm-15mm when a 12Ah current is passed.

The cap assembly 300 also includes a second insulator member or a gasket 60, which is disposed between the cell assembly 20 and the cap plate 30. The second insulator member or the gasket 60 defines therethough a slit for insertion of the cap ears 41 and 42 to thereby electrically and mechanically connect with corresponding electrode ears 21 and 22. The first and the second cap ears 41 and 42 are connected with corresponding first and second electrode ears 21 and 22 by ultrasonic soldering.

Referring to FIGS. 3-6, the electrode ears 21, 22 comprises a first connecting section 211, 221 connecting with the electrode plates and a first engaging section 212, 222 connecting with the cap ears 41, 42. The cap ears 41, 42 comprises a second connecting section 411, 421 connecting with the cap plate 30 and eh second engaging section 412, 422 connecting with the first engaging section 212, 222. The soldered first electrode ear 21 and first cap ear 41 have an M-shaped cross section. The soldered second electrode ear 22 and second cap ear 42 have an M-shaped cross section, either. According to such an M-shaped connecting method, the distance between the cap plate 30 and the cell assembly 20 is no larger than 10mm. Consequently, the interior room of the casing 200 can be reduced.

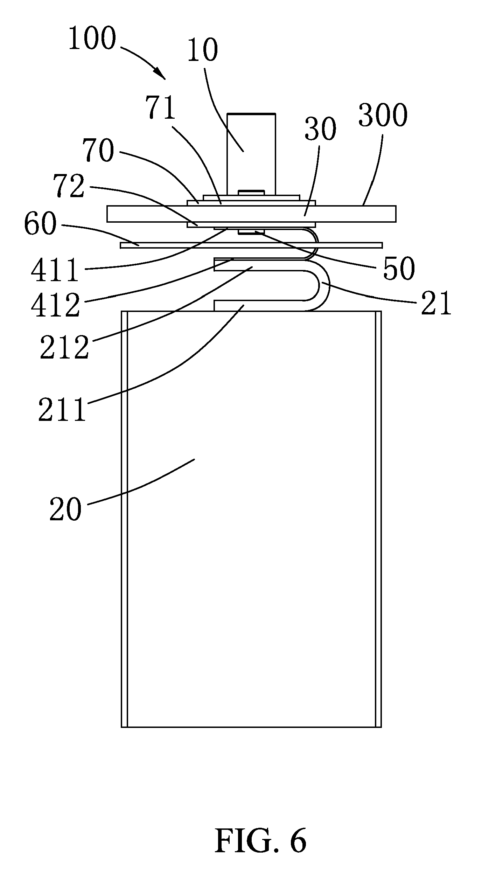

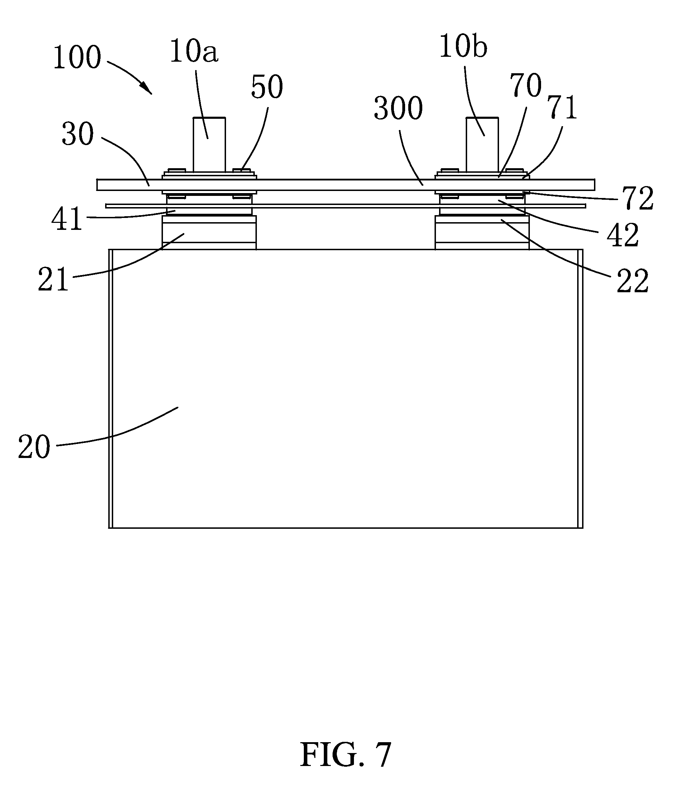

Turning to FIGS. 6 and 7, the insulator member 70 is provided with a first insulating portion 71 disposed to a top face of the cap plate 30 for electrically isolating the terminal 10 and the cap plate 30, a second insulating portion 72 disposed to a bottom face of the cap plate 30 for electrically isolating the cap plate 30 and the cap ears 41 and 42, and a connecting portion (not shown) connecting the first and the second insulating portion 71 and 72. The first insulating portion 71 partially covers the top face of the cap plate 30 and the second insulating portion 72 partially covers the bottom face of the cap plate 30. The connecting portion is adhered and covered the inside surface of the holes of the cap plate 30. The rivet 50 is inserted through such of the hole. The insulator member 70 has an I-shaped cross section, while other shapes are also applicable. As can be understood, the insulator member 70 should be larger than the mounting portion 12 of the terminal 10 for insulation purposes. In this preferred embodiment, the insulator member 70 and the second insulator member or the gasket 60 consist double-insulating structure for the battery 100.

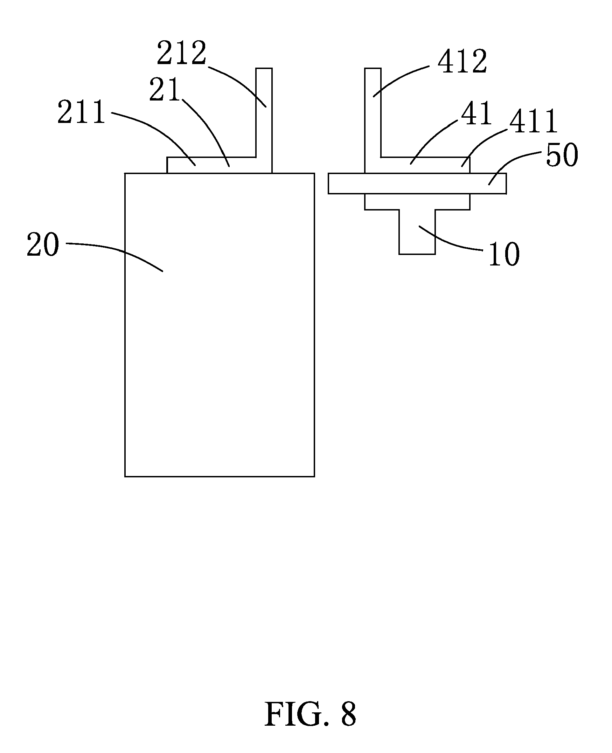

Turning to FIG. 8, before soldering the cap ears 41 and 42 with corresponding electrode ears 21 and 22, the second connecting sections 411 and 421 of the cap ears 41 and 42 are riveted to the cap plate 30. Then, the cap ears 41 and 42 are bent to thereby make the second connecting sections 411 and 421 be perpendicular to the second engaging sections 412 and 422. Meanwhile, the electrode ears 21 and 22 are also bent to thereby make the first connecting section 211 and 221 be perpendicular to the first engaging section 212 and 222. In other words, both the cap ear and the electrode ear are bent to L-shape. The cap ears 41 and 42 and the electrode ears 21 and 22 are soldered according to their corresponding polarity by ultrasonic soldering. Finally, assembling and adjusting the cap assembly 300 and the cell assembly 20, an M-shaped ear structure is formed.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to activate others skilled in the art to utilize the invention and various embodiments and with various modifications as are suited to the particular use contemplated. Alternative embodiments will become apparent to those skilled in the art to which the present invention pertains without departing from its spirit and scope. Accordingly, the scope of the present invention is defined by the appended claims rather than the foregoing description and the exemplary embodiments described therein.

It is to be understood, however, that even though numerous, characteristics and advantages of the present invention have been set forth in the foregoing description, together with details of the structure and function of the invention, the disclosed is illustrative only, and changes may be made in detail, especially in matters of number, shape, size, and arrangement of parts within the principles of the invention to the full extent indicated by the broadest general meaning of the terms in which the appended claims are expressed.

## Claims

1. A lithium ion battery (100), comprising:
a cell assembly (20) comprising a plurality of stacked electrode plates,
each electrode plate having an electrode ear;
a casing (200) containing said cell assembly;
a cap assembly (300) comprising a cap plate (30) covering a top side of
said casing, a pair of electrode terminals (10) assembled to one side face of said cap plate, and a pair of cap ears (41, 42) connecting to and electrically separated from the other side face of said cap plate;
a retaining member (50) connecting said cap plate, said pair of electrode
terminals and said cap ears;
an insulator (70) electrically separating said electrode terminals from said
cap plate and electrically separating said cap plate from said cap ears; and
electrolyte filling within the casing.

2. The lithium ion battery as claimed in claim 1, wherein said electrode ears of said electrode plates are soldered together to form a first electrode ear and a second electrode ear, respectively, and said first electrode ear and said second electrode ear are electrically separated from each other.

3. The lithium ion battery as claimed in claim 2, wherein said first electrode ear electrically and mechanically connects with one cap ear, and said second electrode ear electrically and mechanically connects with another cap ear.

4. The lithium ion battery as claimed in claim 3, wherein said first electrode ear and said one cap ear have an M-shape cross section, and said second electrode ear and said another cap ear have an M-shape cross section.

5. The lithium ion battery as claimed in claim 3 or claim 4, wherein said first electrode ear comprises a first connecting section connecting to said electrode plates having a first polarity and a first engaging section connecting to said one cap ear, and said second electrode ear comprises a first connecting section connecting to said electrode plates having a second polarity and a first engaging section connecting to said another cap ear.

6. The lithium ion battery as claimed in claim 5, wherein said cap ear has a second connecting section connecting to said cap plate and a second engaging section engaging with said first engaging section of said first and second electrode ears.

7. The lithium ion battery as claimed in claim 6, wherein said insulator has a gasket positioned between said cap plate and said cell assembly, a distance between said cap plate and said stacked electrode plates of said cell assembly preferably being no larger than 10mm.

8. The lithium ion battery as claimed in claim 2, wherein each of said pair of electrode terminals has a mounting portion mounting to said cap plate and a contact portion projecting perpendicularly from said mounting portion, said mounting portion preferably having an ellipse shape.

9. The lithium ion battery as claimed in any preceding claim, wherein said electrode terminal forms a coating layer and the coating layer is nickel or bronze.

10. The lithium ion battery as claimed in any preceding claim, wherein said electrode terminal has a T-shaped cross section and is preferably formed by cold stamping.

11. The lithium ion battery as claimed in any preceding claim, wherein said insulator has a first insulator member assembled to said cap plate and a second insulator member assembled to said cap ears,
wherein said first insulator member preferably has a first insulating portion positioned to one side of said cap plate for electrically insulating said electrode terminal from said cap plate, and preferably has a second insulating portion positioned to opposite side of said cap plate for electrically insulating said cap plate from said cap ear.

12. The lithium ion battery as claimed in claim 11, wherein said cap plate defines a cap hole and wherein said first insulator member adhered to inside surface of said cap hole.

13. The lithium ion battery as claimed in claim 11, wherein said first insulator member includes an I-shaped cross section and said second insulator member has a flat shape.

14. The lithium ion battery as claimed in any of claims 2 to 7,
wherein said first electrode ear and said first cap ear are soldered with
each other and said second electrode ear and said second cap ear are soldered with each other;
wherein said first electrode terminal electrically and mechanically connects
with said first cap ear, and said second electrode terminal electrically and mechanically connects with said second cap ear.

15. The lithium ion battery as claimed in claim 14, wherein said first connecting section of said electrode ear is perpendicular to said first engaging section when soldering to said cap ear and said second connecting section of said cap ear is preferably perpendicular to said second engaging section when soldering to said electrode ear.
